# EUROPÄISCHE PATENTSCHRIFT

(11) **EP 1 392 747 B1**
(45) Veröffentlichungstag und Bekanntmachung des Hinweises auf die Patenterteilung: **02.11.2016**
(21) Anmeldenummer: 02745314.1
(22) Anmeldetag: 24.05.2002
(51) Int. Cl.: C08G 18/62, C08G 18/28, C09D 5/04, C08G 18/32

(54) **RHEOLOGIEHILFSMITTEL, VERFAHREN ZU SEINER HERSTELLUNG UND SEINE VERWENDUNG**
RHEOLOGICAL ADJUNCT, METHOD FOR PRODUCTION AND USE THEREOF
ADJUVANT RHEOLOGIQUE, PROCEDE POUR SA PRODUCTION ET SON UTILISATION

(30) Priorität: 01.06.2001 DE 10126647
(43) Veröffentlichungstag der Anmeldung: 03.03.2004
(73) Patentinhaber: BASF Coatings GmbH, 48165 Münster (DE)
(72) Erfinder: BAUMGART, Hubert, 48163 Münster (DE); HEID, Ingrid, 48149 Münster (DE); RÖCKRATH, Ulrike, 48308 Senden (DE); KLEINE BECKMANN, Helmut, 48346 Ostbevern (DE); POTH, Ulrich, 48163 Münster (DE)
(74) Vertreter: Leifert & Steffan
(86) Internationale Anmeldenummer: PCT/EP2002/005702
(87) Internationale Veröffentlichungsnummer: WO 2002/098943

(56) Entgegenhaltungen:
- EP-A- 0 435 428
- WO-A-00/71596
- US-A- 4 383 068
- US-A- 4 677 028
- US-A- 4 882 408
- DATABASE WPI Section Ch, Week 198910 Derwent Publications Ltd., London, GB; Class A25, AN 1989-072706 XP002214748 & JP 01 024851 A (MITSUI TOATSU CHEM INC), 26. Januar 1989 (1989-01-26)

## Beschreibung

### Klarlac enthalten ein Rheologiehllfsmittel und Verwendung des Karlacks

Die vorliegende Erfindung betrifft einen Klarlack enthaltend ein Rheologiehilfsmittel. Des Weiteren betrifft die Erfindung die Verwendung des Klarlacks für die Herstellung von Klarlackierungen.

Rheologiehilfsmittel zur Einstellung eines strukturviskosen Verhaltens (vgl. Römpp Lexikon Lacke und Druckfarben, Georg Thieme Verlag, Stuttgart, New York, 1998, »Strukturviskosität«, Seite 546) und sie enthaltende strukturviskose Beschichtungsstoffe sind seit langem bekannt.

Mit dem Einsatz von Rheologiehilfsmitteln in Beschichtungsstoffen soll unter anderem die Applikation von vergleichsweise dicken Lackschichten ermöglicht werden, ohne daß es zu störender "Läuferbildung" kommt. Insbesondere im Fall von nichtwäßrigen Lacken, die ein Rheologiehilfsmittel auf Basis von Harnstoffderivaten enthalten, werden, jedenfalls bei hohen Feststoffgehalten, Lackoberflächen erhalten, die hinsichtlich ihres optischen Erscheinungsbildes (insbesondere Verlauf und Glanz) unbefriedigend sind und zudem aber auch zu nicht ausreichend schwitzwasserresistenten (Weißanlaufen durch Wassereinlagerung) Lackierungen führen.

Aus der internationalen Patentanmeldung WO 00/31194 sind Rheologiehilfsmittel bekannt, die Harnstoffderivate und Polymere mit seitenständigen oder endständigen Carbamatgruppen enthalten. Die Harnstoffderivate können durch Umsetzung von Monoaminen mit Polyisocyanaten in der Gegenwart dieser Polymeren hergestellt werden. Die mit den Rheologiehilfsmitteln ausgerüsteten Beschichtungsstoffe können auch oberflächenaktive oder grenzflächenaktive Substanzen (surfactants; vgl. Römpp Lexikon Lacke und Druckfarben, Georg Thieme Verlag, Stuttgart, New York, Seite 271, »Grenzflächenaktive Stoffe«) enthalten. Die Rheologiehilfsmittel verbessern das strukturviskose Verhalten der hiermit ausgerüsteten Beschichtungsstoffe und unterdrücken wirksam die Läuferneigung. Die hieraus hergestellten Lackierungen weisen einen hohen Glanz und eine hohe Härte auf.

Aus der internationalen Patentanmeldung WO 00/37520 sind Harnstoffderivate, herstellbar durch Umsetzung mindestens eines Amins, insbesondere eines Monoamins, mit mindestens einem Polyisocyanat in der Gegenwart mindestens eines Aminoplastharzes, und ihre Verwendung als Rheologiehilfsmittel bekannt. Die Rheologiehilfsmittel sollen universell einsetzbar sein. Der Patentanmeldung läßt sich auch nicht entnehmen, ob - und wenn ja - in welchem Umfang diese Rheologiehilfsmittel die Lagerstabilität und die Ringleitungsstabilität der strukturviskosen Beschichtungsstoffe, Klebstoffe und Dichtungsmassen und die Brillanz der hieraus hergestellten Beschichtungen, Klebschichten und Dichtungen beeinflussen.

Aus den deutschen Patentanmeldungen DE 199 24 170 A1, DE 199 24 171 A1 und DE 199 24 172 A1 sind Rheologiehilfsmittel, herstellbar aus Monoaminen und Polyisocyanaten, und strukturviskose Beschichtungsstoffe bekannt, die eine vergleichsweise gute Lagestabilität haben. Hinsichtlich des Verlaufs, der Oberflächenglätte, der Zwischenschichthaftung und der Schwitzwasserbeständigkeit weisen die hieraus hergestellten Beschichtungen ein gut ausgewogenes Eigenschaftsprofil auf. Die Stabilität unter statischen (Lagerstabilität) und dynamischen Bedingungen (Transportstabilität und Ringleitungsstabilität) der strukturviskosen Beschichtungsstoffe sowie die Brillanz der hieraus hergestellten Beschichtungen müssen jedoch noch weiter verbessert werden.

Aus der nicht vorveröffentlichten deutschen Patentanmeldung DE 100 42 152.0 sind mit aktinischer Strahlung aktivierbare Rheologiehilfsmittel bekannt. Sie werden hergestellt, indem man ein Monoamin, wie Benzylamin, mit einem Polyisocyanat, wie Hexamethylendiisocyanat, in der Gegenwart einer Verbindung, die mindestens eine funktionelle Gruppe mit mindestens einer mit aktinischer Strahlung aktivierbaren Bindung aufweist, wie Dipentaerythritpentaacrylat, umsetzt. Die Gemische aus Harnstoffderivat und Dipentaerythritpentaacrylat werden zur Herstellung von mit aktinischer Strahlung oder thermisch und mit aktinischer Strahlung (Dual-Cure) Beschichtungsstoffen verwendet. Diese können Bindemittel enthalten, die Allophanat- und/oder Carbamatgruppen sowie gegebenenfalls funktionelle Gruppe mit mindestens einer mit aktinischer Strahlung aktivierbaren Bindung wie Acrylatgruppen, aufweisen. Außerdem können sie Aminoplastharze als Vernetzungsmittel enthalten. Darüber hinaus können sie auch noch übliche und bekannte, rein mit aktinischer Strahlung härtbare Bindemittel, wie (meth)acrylfunktionelle (Meth)Acrylatcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate, und übliche und bekannte mit aktinischer Strahlung härtbare Reaktiverdünner, die bis zu tetrafunktionell sind und in Römpp Lexikon Lacke und Druckfarben, Georg Thieme Verlag, Stuttgart, New York, 1998, »Reaktiwerdünner«, Seiten 491 und 492, beschrieben werden, wie beispielsweise Pentaerythrittetraacrylat, enthalten.

Aufgabe der vorliegenden Erfindung ist es, einen Klarlack zu finden, der ein Rheologiehilfsmittel auf Basis von Harnstoffderivaten enthält, wobei das Rheologiehilfsmittel die Stabilität von strukturviskosen Klarlacken unter statischen und dynamischen Bedingungen weiter verbessert und die Brillanz der aus den strukturviskosen Klarlacken Klarlacken hergestellen Beschichtungen erhöht.

Demgemäß wurde ein Klarlack gefunden der ein Rheologiehilfsmittel enthält, das Rheologiehilfsmittel enthaltend mindestens ein Harnstoffderivat, herstellbar, indem man
(A) mindestens ein Diisocyanat mit
(B) mindestens einem Diamin mit primären und/oder sekundären Aminogruppen und mindestens einem primären Monoamin umsetzt.

Im folgenden wird der Klarlack, enthaltend das Rheologiehilfsmittel, enhaltend mindestens ein Harnstoffderivat, als "erfindungsgemäßer Klarlack" bezeichnet.

Außerdem wir ein Verfahren zur Herstellung von Rheologiehilfsmitteln, enthaltend mindestens ein Harnstoffderivat, beschrieben, dadurch gekennzeichnet, dass man
(A) mindestens ein Diisocyanat mit
(B) mindestens einem Diamin mit primären und/oder sekundären Aminogruppen und mindestens einem primären Monoamin
in einem organischen Medium umsetzt.

Im Folgenden wird das Verfahren zur Herstellung von Rheologiehilfsmitteln, enthaltend mindestens ein Harnstoffderivat, als Verfahren zur Herstellung von erfindungsgemäß einsetzbaren Rheologiehilfsmitteln bezeichnet.

Außerdem wurde die Verwendung der erfindungsgemäßen Klarlacke zur Herstellung von Klarlackierungen gefunden.

Im Hinblick auf den Stand der Technik war es überraschend und für den Fachmann nicht vorhersehbar, daß die Aufgabe, die der vorliegenden Erfindung zugrunde lag, mit Hilfe der erfindungsgemäßen Klarlacke gelöst werden konnte. Vor allem überraschte, daß die Rheologiehilfsmittel mit Hilfe des Verfahrens in einfacher Weise und zuverlässig reproduzierbar hergestellt werden konnten. Insbesondere überraschte, daß die Rheologiehilfsmittel eine besonders starke Strukturviskosität aufwiesen, die diejenige von bekannten Rheologiehilfsmittel übertraf, und außerordentlich breit anwendbar waren. Sie lieferten, Klarlacke mit einer besonders hohen Lager-, Transport- und Ringleitungsstabilität, die sich einfach applizieren ließen und auch an vertikalen Flächen keine oder nur eine sehr geringe Läuferneigung aufwiesen. Die hieraus hergestellten Beschichtungen wiesen einen hervorragenden Verlauf und keine Oberflächenstrukturen wie Orangenschalenhaut, Krater oder Nadelstiche auf. Die Beschichtungen waren außerdem hoch brillant.

Der Gehalt des Rheologiehilfsmittels an den Harnstoffderivaten kann breit variieren und richtet sich insbesondere nach dem strukturviskosen Verhalten, das die erfindungsgemäßen Klarlacke haben sollen. Vorzugsweise enthält das Rheologiehilfsmittel die Harnstoffderivate in einer Menge von, bezogen auf das Rheologiehilfsmittel, 0,1 bis 10, bevorzugt 0,2 bis 9, besonders bevorzugt 0,3 bis 8, ganz besonders bevorzugt 0,4 bis 7 und insbesondere 0,5 bis 6 Gew.-%.

Das Rheologiehilfsmittel ist herstellbar, in dem man
- mindestens ein Diamin (B) mit primären und/oder sekundären, insbesondere primären Aminogruppen, und
- mindestens ein primäres Monoamin (B),
mit mindestens einem Diisocyanat (A), vorzugsweise in organischem Medium, umsetzt, wobei die Ausgangsprodukte (A) und (B) vorzugsweise in solchen Mengen verwendet werden, dass der vorstehend beschriebene Gehalt an Harnstoffderivaten resultiert.

Soweit im Folgenden auch der Begriff "Polyisocyanat (A)" verwendet wird, fallen zum Zwecke der Herstellung der in den erfindungsgemäß einzusetzenden Rheologiehilfmitteln enthaltenen Harnstoffderivate nur die unter den Polyisocyanaten (A) aufgeführten Diisocyanate (A) unter den Begriff des "mindestens einen Diisocyanats (A)".

Soweit im Folgenden auch der Begriff "Polyamin (B)" verwendet wird, fallen zum Zwecke der Herstellung der in den erfindungsgemäß einzusetzenden Rheologiehilfmitteln enthaltenen Harnstoffderivate nur die unter den Polyaminen (B) aufgeführten Diamine (B) unter den Begriff des "mindestens einen Diamins (B)".

Vorzugsweise werden die Ausgangsprodukte (A) und (B) in solchen Mengen miteinander umgesetzt, daß das Äquivalentverhältnis von Isocyanatgruppen in (A) zu den Aminogruppen in (B) bei 2 : 1 bis 1 : 2, bevorzugt 1,8 : 1 bis 1 : 1,8, besonders bevorzugt 1,6 : 1 bis 1 : 1,6, ganz besonders bevorzugt 1,4 : 1 bis 1 : 1,4 und insbesondere 1,2 : 1 bis 1 : 1,2 liegt.

Erfindungsgemäß ist es von Vorteil, wenn dabei das Äquivalentverhältnis von Aminogruppen in den Polyaminen (B) zu den Aminogruppen in den Monoaminen (B) bei 4 : 1 bis 1 : 2, bevorzugt 3 : 1 bis 1 : 1, besonders bevorzugt 2 : 1 bis 1 : 1, ganz besonders bevorzugt 1,5 : 1 bis 1 : 1 insbesondere 1,2 : 1 bis 1 : 1 liegt.

Die Polyamine (B) werden aus der Gruppe der aliphatischen, cycloaliphatischen, aromatischen, aliphatisch-aromatischen, cycloaliphatisch-aromatischen und aliphatisch-cycloaliphatischen Polyamine ausgewählt. Ein Polyamin (B) wird beispielsweise als ein aliphatisch-aromatisches Polyamin bezeichnet, wenn mindestens eine Aminogruppe mit einer aliphatischen Gruppe und mindestens eine Aminogruppe mit einer aromatischen Gruppen verbunden ist. Diese Nomenklaturregel ist bei den anderen Gruppen von Polyaminen (B) sinngemäß anzuwenden.

Vorzugsweise werden die Polyamine (B) aus der Gruppe, bestehend aus aliphatischen und cycloaliphatischen Polyaminen ausgewählt. Beispiele geeigneter Polyamine (B) sind aus der internationalen Patentanmeldung WO 00/37520, Seite 4, Zeilen 6 bis 19, bekannt. Bevorzugt werden die Polyamine (B) aus der Gruppe, bestehend aus Polyethylenimin, Triethylentetramin, Diethylentriamin, Tripropylentetramin, Dipropylentriamin, Methylendiamin, Ethylendiamin, 1,2- und 1,3-Propylendiamin, 1,4-, 1,3- und 1,2-Butandiamin, 1,4-, 1,3-, und 1,2-Diaminocyclohexan und 1,4-, 1,3- und 1,2-Di(aminomethyl)benzol, ausgewählt.

Die Monoamine (B) werden aus der Gruppe der aliphatischen, cycloaliphatischen und aromatischen, insbesondere der aliphatischen, Monoamine ausgewählt. Ein Monoamin (B) wird beispielsweise als ein aromatisches Monoamin bezeichnet, wenn die Aminogruppe mit einer aromatischen Gruppen verbunden ist. Diese Nomenklaturregel ist bei den anderen Gruppen von Monoaminen (B) sinngemäß anzuwenden.

Beispiele geeigneter Monoamine (B) sind aus den deutschen Patentanmeldungen DE 199 24 172 A1, Seite 3, Zeilen 3 bis 10, oder DE 199 24 171 A1, Seite 3, Zeilen 35 bis 42, oder den internationalen Patentanmeldungen WO 00/31194, Seite 11, Zeilen 14 bis 29, und WO 00/37520, Seite 3, Zeile 15, bis Seite 4, Zeile 5, bekannt. Besonders bevorzugt werden Methoxypropylamin, Benzylamin und/oder n-Hexylamin verwendet.

Beispiele geeigneter Polyisocyanate (A) sind Diisocyanate, wie Tetramethylen-1,4-diisocyanat, Hexamethylen-1,6-diisocyanat, 2,2,4-Trimethylhexamethylen-1,6-diisocyanat omega,omega'-Dipropyl-ätherdiisocyanat, Cyclohexyl-1,4-diisocyanat, Cyclohexyl-1,3-diisocyanat, Cyclohexyl-1,2-diisocyanat, Dicyclohexylmethan-4,4'-diisocyanat, 1,5-Dimethyl-2,4-di(isocyanato-methyl)-benzol, 1,5-Di-methyl-2,4-di(isocyanatoethyl)-benzol, 1,3,5-Trimethyl-2,4-di(isocyanatomethyl)-benzol, 1,3,5-Triethyl-2,4-di(isocyanatomethyl)-benzol, Isophorondiisocyanat, Dicyclohexyldimethylmethan-4,4' -diisocyanat, 2,4-Toluylendiisocyanat, 2,6-Toluylendiisocyanat, Diphenylmethan-4,4'-diisocyanat.

Weitere geeignete Beispiele für geeignete Polyisocyanate (A) sind Triisocyanate wie Nonantriisocyanat (NTI).

Es können auch Polyisocyanate (A) auf der Basis der vorstehend beschriebenen Diisocyanate und Triisocyanate (A) verwendet werden. Die entsprechenden Polyisocyanate sind Oligomere, die Isocyanurat-, Biuret-, Allophanat-, Iminooxadiazindion-, Urethan-, Carbodiimid-, Harnstoff- und/oder Uretdiongruppen enthalten. Beispiele geeigneter Herstellungsverfahren sind beispielsweise aus den Patentschriften und Patentanmeldungen CA 2,163,591 A1, US 4,419,513 A, US 4,454,317 A, EP 0 646 608 A1, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A, US 5,290,902 A, EP 0 649 806 A1, DE 42 29 183 A1 oder EP 0 531 820 A1 bekannt.

Ganz besonders bevorzugt werden die Oligomeren (A) von Hexamethylendiisocyanat und von Isophorondiisocyanat verwendet. Die vorstehend beschriebenen Oligomere (A) haben vorteilhafterweise eine NCO-Funktionalität von 2,0 - 5,0, vorzugsweise von 2,2 - 4,0, insbesondere von 2,5 - 3,8.

Außerdem kommen die hochviskosen Polyisocyanate (A), wie sie in der deutschen Patentanmeldung DE 198 28 935 A1 beschrieben werden, in Betracht.

Weitere Beispiele geeigneter Polyisocyanate (A) sind
la) Isocyanate mit mindestens einer Diisocyanat-Struktureinheit, welche
   i) eine ungesättigte bzw. aromatische oder nicht aromatische Ringstruktur mit 5-10 Ringatomen und
   ii) zwei an die Ringstruktur gebundene Isocyanatgruppen aufweist, wobei
   iii) im Falle einer nicht aromatischen Ringstruktur
      a) beide Isocyanatgruppen über lineares C₁-C₉-Alkyl und/oder lineares C₂-C₁₀-Etheralkyl oder
      b) eine Isocyanatgruppe direkt und die andere über lineares C₂-C₉-Alkyl und/oder lineares C₂-C₁₀-Etheralkyl und
   iv) im Fall einer ungesättigten aromatischen Ringstruktur mindestens eine der beiden Isocyanatgruppen über lineares C₂-C₉-Alkyl und/oder lineares C₂-C₁₀-Etheralkyl, welche beiden Reste keine benzylischen Wasserstoffatome aufweisen, mit der Ringstruktur verbunden ist oder sind;
   und/oder
Ib) zumindest ein Oligomer dieses Isocyanats la) mit 2 bis 10 Isocyanateinheiten, insbesondere ein Trimer;
   und/oder
Ic) mindestens ein partiell blockiertes Isocyanat la) und/oder mindestens ein partiell blockiertes Oligomer Ib).

Die Isocyanate la) können zwei oder mehr dieser Diisocyanat-Struktureinheiten aufweisen, indes hat es sich bewährt, nur eine zu verwenden.

Bezüglich der Diisocyanat-Struktureinheit des Diisocyanats la) bestehen verschiedene Möglichkeiten der weiteren Ausbildung, die folgend beschrieben werden.

Hinsichtlich der Ringstruktur (i) ist es grundsätzlich möglich, daß es sich um Heteroringe handelt. Dann enthält die Ringstruktur (i) neben C-Atomen als Ringatome auch davon verschiedene Ringatome, wie beispielsweise N-Atome, O-Atome oder Si-Atome. Hierbei kann es sich um gesättigte oder ungesättigte bzw. aromatische Heteroringe handeln. Beispiele geeigneter gesättigter Heteroringe sind die Silacyclopentan-, Silacyclohexan-, Oxolan-, Oxan-, Dioxan-, Morpholin-, Pyrrolidin-, Imidazolidin-, Pyrazolidin-, Piperidin- oder Chinuklidinringe. Beispiele geeigneter ungesättigter bzw. aromatischer Heteroringe sind Pyrrol-, Imidazol-, Pyrazol-, Pyridin-, Pyrimidin-, Pyrazin-, Pyridazin- oder Triazinringe. Bevorzugt ist es, wenn die Ringstruktur (i) als Ringatome ausschließlich C-Atome enthält.

Die Ringstruktur (i) kann einerseits brückenfrei sein. In dem Fall, daß die Ringstruktur (i) ein bicyclisches Terpen-Grundgerüst, Decalin, Adamantan oder Chinuklidin ist, können jedoch Brücken enthalten sein. Beispiele geeigneter Terpen-Grundgerüste sind Caran-, Norcaran-, Pinan-, Camphan- oder Norbonan-Grundgerüste.

Die Wasserstoffatome einer Diisocyanat-Struktureinheit la), insbesondere der Ringstruktur (i), können durch Gruppen oder Atome substituiert sein, welche weder mit Isocyanaten noch mit dem Amin und/dem Bindemittel reagieren. Beispiele geeigneter Gruppen sind Nitro-, Alkyl-, Cycloalkyl-, Perfluoralkyl-, Perfluorcycloalkyl- oder Arylgruppen. Beispiele geeigneter Atome sind Halogenatome, insbesondere Fluor.

Vorteilhafterweise besteht die Ringstruktur (i) aus 6 C-Atomen, insbesondere in Form von Cyclohexan oder Benzol.

Beispiele für geeignetes lineares C₁-C₉-Alkyl sind Methylen- oder Ethylensowie Tri, Tetra-, Penta-, Hexa-, Hepta-, Octa- oder Nonamethylenreste, insbesondere Methylenreste.

Die linearen C₂-C₁₀-Etheralkyle sind entweder über die Sauerstoffatome oder über die darin enthaltenen Alkandiylreste mit der Ringstruktur verbunden. Vorzugsweise sind sie über die Sauerstoffatome hiermit verbunden. Die Indices 2 bis 10 bedeuten, daß 2 bis 10 C-Atome in den Etheralkylen enthalten sind.

Die Etheralkyle können nur 1 Sauerstoffatom enthalten. Es ist von Vorteil, wenn 2 bis 10, insbesondere 2 bis 5 Sauerstoffatome in der Kette vorhanden ist. Dann befinden sich 1 oder mehr, insbesondere aber 2, C-Atome zwischen 2 Sauerstoffatomen.

Beispiele geeigneter C₂-C₁₀-Etheralkyle sind
-(O-CH₂)ₘ-, worin m = 1 bis 10,
-(O-C₂H₄)ₚ-, worin p = 1 bis 5,
-(O-C₃H₆)_{q}-, worin q = 1 bis 3 oder
-(O-C₄H₈)ᵣ-, worin r = 1 bis 2.

Wenn das Isocyanat la) zumindest eine Diisocyanat-Struktureinheit mit einer nicht aromatischen Ringstruktur (i), insbesondere Cyclohexan, enthält, können beide Isocyanatgruppen über -CH₂-, vorzugsweise an die Positionen 1 und 3 des Ringstrukturs gebunden sein. Es ist aber auch eine Bindung an die Positionen 1,2 und 1,4 möglich. Die Diisocyanat-Struktureinheit bzw. das Isocyanat la) hat dann beispielsweise die Formel C₆H₁₀(-CH₂-NCO)₂.

Es ist aber auch möglich, daß eine der beiden Isocyanatgruppen unmittelbar an ein Ringatom einer nicht aromatischen Ringstruktur (i), insbesondere Cyclohexan, gebunden ist und daß die zweite Isocyanatgruppe über C₂-C₉-Alkyl, insbesondere C₃-Alkyl an eine weiteres Ringatom, vorzugsweise in 1,2-Konfiguration, gebunden ist. Die Diisocyanat-Struktureinheit bzw. das Isocyanat la) hat dann beispielsweise die Formel C₆H₁₀(-NCO)(-C₃H₆-NCO).

Wenn das Isocyanat la) zumindest eine Diisocyanat-Struktureinheit mit einer ungesättigten oder aromatischen Ringstruktur (i), insbesondere Benzol, enthält, können beide Isocyanatgruppen über C₂-C₉-Alkyl hiermit verbunden sein. Wichtig ist, daß die Alkandiylreste keine benzylischen Wasserstoffatome enthalten, sondern an deren Stelle Substituenten R¹ und R² tragen, welche weder mit Isocyanaten noch mit dem Amin oder dem Bindemittel reagieren. Beispiele geeigneter Substituenten R¹ und R² sind C₁-C₁₀-Alkyl, Aryl- oder Halogen, vorzugsweise -CH₃.

Beispiele geeigneter Alkandiylgruppen sind demnach -CR¹R**²**-(CH₂)ₙ-, worin n = 1 bis 8, insbesondere 1 bis 4, und R¹ und R² = die vorstehend angegebenen Substituenten.

Die vorstehend beschriebenen Alkandiylgruppen sind vorzugsweise an die Positionen 1 und 3 des Benzolrings gebunden. Es ist indes auch in diesem Fall eine Bindung an die Positionen 1,2 und 1,4 möglich. Die Diisocyanat-Struktureinheit bzw. das erfindungsgemäß zu verwendende Isocyanat la) hat dann beispielsweise die Formel C₆Hq₄(-C(CH₃)₂-C₂H₄-NCO)₂.

Die beiden Isocyanatgruppen können indes auch über die vorstehend beschriebenen C₂-C₁₀-Etheralkyle mit dem ungesättigten oder aromatischen Ringstruktur, insbesondere Benzol, verbunden sein. Wichtig ist, daß die Etheralkyle keine benzylischen Wasserstoffatome tragen. Dies kann im Falle, daß die Etheralkyle über C-Atome mit dem aromatischen Ringstruktur verknüpft sind, dadurch erreicht werden, daß die benzylischen C-Atome die vorstehend beschriebenen Substituenten R¹ und R² tragen. Wenn die Etheralkyle über Sauerstoffatome mit dem aromatischen Ringstruktur verknüpft sind, sind keine benzylischen Wasserstoffatome vorhanden, weswegen diese Variante bevorzugt wird.

Es ist auch hier möglich, daß eine der beiden Isocyanatgruppen unmittelbar an ein Ringatom einer ungesättigten oder aromatischen Ringstruktur (i), vorzugsweise eines Benzolrings, gebunden ist und daß die zweite Isocyanatgruppe beispielsweise über C₃-C₉-Alkyl, welches keine benzylischen Wasserstoffatome aufweist, an eine weiteres Ringatom, vorzugsweise in 1,2-Konfiguration, gebunden ist. Die Diisocanat-Struktureinheit bzw. das erfindungsgemäß zu verwendende Isocyanat la) hat dann beispielweise die Formel C₆H₄(-NCO)(-C(CH₃)₂-(CH₂)₂-NCO).

Anstelle des Isocyanats la) oder zusätzlich zu diesem kann mindestens ein Oligomer Ib) verwendet werden. Das Oligomer Ib) wird hergestellt aus dem Isocyanat la), wobei vorteilhafterweise 2 bis 10 Monomereinheiten umgesetzt werden und wobei die Trimerisierung besonders bevorzugt wird. Die Oligomerisierung und Trimersierung kann mit Hilfe üblicher und bekannter geeigneter Katalysatoren zur Bildung von Uretdion-, Biuret-, Isocyanurat-, Iminooxadiazindion-, Harnstoff und/oder Allophanatgruppen führen. Eine Oligomerisierung ist aber auch möglich durch Umsetzung mit niedermolekularen Polyolen wie Trimethylolpropan oder Homotrimethylolpropan, Glycerin, Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexan-diol-1,6, die, sofern erforderlich, ggf. partiell ethoxyliert und/oder propoxyliert oder anderweitig hydrophiliert sind.

Zusätzlich zu den Diisocyanaten und/oder ihren Oligomeren und/oder den Isocyanaten la) und/oder ihren Oligomeren Ib) können mindestens ein partiell blockiertes Diisocyanat und/oder sein partiell blockiertes Oligomer und/oder mindestens ein partiell blockiertes Isocyanat la) und/oder sein partiell blockiertes Oligomer lb) (= Isocyanat Ic)) verwendet werden. Des weiteren können anstelle der Diisocyanate und/oder ihrer Oligomeren und/oder der Isocyanate la) und/oder ihrer Oligomeren Ib) mindestens ein partiell blockiertes Oligomer und/oder mindestens ein partiell blockiertes Oligomer Ib) (= Isocyanat Ic)) verwendet werden.

Ergänzend wird auf Seite 3, Zeilen 10 bis 51, der deutschen Patentschrift DE 198 11 471 A1 oder auf Seite 8, Zeilen 4 bis 23, der internationalen Patentanmeldung WO 94/22968 verwiesen.

Beispiele geeigneter Blockierungsmittel sind die aus der US-Patentschrift US 4,444,954 A bekannten Blockierungsmittel wie i) Phenole wie Phenol, Cresol, Xylenol, Nitrophenol, Chlorophenol, Ethylphenol, t-Butylphenol, Hydroxybenzoe-säure, Ester dieser Säure oder 2,5-di-t-Butyl-4-hydroxytoluol; ii) Lactame, wie Caprolactam, Valerolactam, Butyrolactam oder Propiolactam; iii) aktive methylenische Verbindungen, wie Diethylmalonat, Dimethylmalonat, Ethylacetoacetat, Methylacetoacetat oder Acetylaceton; iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethyl-ether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol oder Acetocyanhydrin; v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol; vi) Säureamide wie Acetoanilid, Acetoanisidinamid, Acrylamid, Methacrylamid, Essigsäureamid, Stearinsäureamid oder Benzamid; vii) Imide wie Succinimid, Phthalimid oder Maleimid; viii) Amine wie Diphenylamin, Phenylnaphthylamin, Xylidin, N-Phenylxylidin, Carbazol, Anilin, Naphthylamin, Butylamin, Dibutylamin oder Butylphenylamin; ix) Imidazole wie Imidazol oder 2-Ethylimidazol, x) Harnstoffe wie Harnstoff, Thioharnstoff, Ethylenharnstoff, Ethylenthioharnstoff oder 1,3-Diphenylharnstoff; xi) Carbamate wie N-Phenylcarbamidsäurephenylester oder 2-Oxazolidon; xii) Imine wie Ethylenimin, xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime; xiv) Salze der schwefeligen Säure wie Natriumbisulfit oder Kaliumbisulfit; xv) Hydroxamsäureester wie Benzylmethacrylohydroxamat (BMH) oder Allylmethacrylohydroxamat oder xvi) substituierte Pyrazole, Imidazole oder Triazole; sowie (xvii) Gemische der genannten Blockierungsmittel.

Die vorstehend beschriebenen Oligomere Ib) haben vorteilhafterweise ebenfalls eine NCO-Funktionalität von 2,0 - 5,0, vorzugsweise von 2,2 - 4,0, insbesondere von 2,5 - 3,8.

Ergänzend wird auf die internationalen Patentanmeldungen WO 00/31194, Seite 11, Zeile 30, bis Seite 12, Zeile 26, und WO 00/37520, Seite 5, Zeile 4, bis Seite 6, Zeile 27, oder den deutschen Patentanmeldungen DE 199 24 172 A1, Seite 3, Zeilen 11 bis 23, DE 199 24 170 A1, Spalte 3, Zeile 61, bis Spalte 6, Zeile 68, oder DE 199 24 171 A1, Seite 3, Zeilen 43, bis Seite 5, Zeile 34, verwiesen.

Wie vorstehend erwähnt, wird die Umsetzung zwischen den Ausgangsprodukten (A) und (B) vorzugsweise in einem organischen Medium durchgeführt.

Vorzugsweise enthält das organische Medium mindestens eine Verbindung, ausgewählt aus der Gruppe, bestehend aus organischen Lösemitteln sowie thermisch, mit aktinischer Strahlung und thermisch und mit mit aktinischer Strahlung (Dual-Cure) härtbaren, niedermolekularen, oligomeren und polymeren Verbindungen, oder es besteht hieraus.

Vorzugsweise werden die niedermolekularen Verbindungen aus der Gruppe, bestehend aus thermisch und mit aktinischer Strahlung härtbaren Reaktivverdünnern und thermisch oder thermisch und mit aktinischer Strahlung härtbaren Vernetzungsmitteln, und die oligomeren und polymeren Verbindungen aus der Gruppe, bestehend aus statistisch, alternierend und blockartig aufgebauten, linearen, verzweigten und kammartig aufgebauten, thermisch, mit aktinischer Strahlung und thermisch und mit aktinischer Strahlung (Dual-Cure) (Co)Polymerisaten von olefinisch ungesättigten Monomeren, sowie Polyadditionsharzen und Polykondensationsharzen, ausgewählt werden.

Wesentlich für die Auswahl ist, daß die vorstehend beschriebenen organischen Lösemittel und Verbindungen nicht die Umsetzung zwischen den Ausgangsprodukten (A) und (B) stören, etwa indem sie rascher mit den Polyisocyanaten (A) reagieren als die Ausgangsprodukte (B).

Vorzugsweise werden die organischen Lösemittel aus den in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschriebenen Lösemitteln ausgewählt.

Beispiele geeigneter thermisch härtbarer Reaktivverdünner werden in den deutschen Patentanmeldungen DE 198 09 643 A1, DE 198 40 605 A1 oder DE 198 05 421 A1, Beispiele geeigneter mit aktinischer Strahlung härtbarer Reaktiwerdünner werden in Römpp Lexikon Lacke und Druckfarben, Stuttgart, New York, 1998, Seiten 491 und 492, beschrieben.

Hier und im folgenden ist unter aktinischer Strahlung elektromagnetische Strahlung, wie nahes Infrarot (NIR), sichtbares Licht, UV-Strahlung und Röntgenstrahlung, insbesondere UV-Strahlung, und Korpuskularstrahlung, wie Elektronenstrahlung, zu verstehen.

Beispiele geeigneter thermisch oder thermisch und mit aktinischer Strahlung härtbarer Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden; Carboxylgruppen enthaltende Verbindungen oder Harze, wie sie beispielsweise in der Patentschrift DE 196 52 813 A1 beschrieben werden; Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden; überschüssige Polyisocyanate (A), wie sie vorstehend beschrieben werden; vollständig oder teilweise blockierte Polyisocyanate (A); unblockierte Isocyanato(meth)acrylate gemäß der europäischen Patentanmeldung EP 0 928 800 A1 oder teilweise oder vollständig blockierte lsocyanato(meth)acrylate gemäß der europäischen Patentanmeldung EP 0 928 800 A1, wie sie in der nicht vorveröffentlichten deutschen Patentanmeldung DE 100 41 635.7 beschrieben werden; und/oder Tris(alkoxycarbonylamino)-triazine, wie sie aus den Patentschriften US 4,939,213 A, US 5,084,541 A, US 5,288,865 A oder EP 0 604 922 A bekannt sind.

Beispiele geeigneter (Co)Polymerisate, Polyadditionsharze und Polykondensationsharze sind beispielsweise aus der deutschen Patentanmeldung DE 199 24 172 A1, Seite 3, Zeile 33, bis Seite 5, Zeile 21, der deutschen Patentanmeldung DE 199 24 171 A1, Seite 5, Zeile 48, bis Seite den, Zeile 37, oderder deutschen Patentanmeldung DE 199 08 013 A1, Spalte 5, Zeile 44, bis Spalte 8, Zeile 65 und Spalte 9, Zeilen 25 bis 67, im Detail bekannt.

Die Umsetzung der Ausgangsprodukte (A) und (B) bietet keine methodischen Besonderheiten, sondern wird beispielsweise, wie in der deutschen Patentanmeldung DE 199 24 171 A1, Seite 5, Zeilen 35 bis 40, der deutschen Patentanmeldung DE 199 24 172 A1, Seite 3, Zeilen 22 bis 27, oder der internationalen Patentanmeldung WO 00/31194, Seite 12, Zeile 23, bis Seite 13, Zeile 19, beschrieben, durchgeführt. Die Umsetzung in der Gegenwart von beispielsweise Aminoplastharzen erfolgt, wie in der internationalen Patentanmeldung WO 00/37520, Seite 6, Seite 29, bis Seite 8, Zeile 14, und Seite 9, Zeile 28, bis Seite 10, Zeile 32, beschrieben.

Für die Herstellung der Harnstoffderivate im Tonnenmaßstab ist das aus der deutschen Patentanmeldung DE 199 03 283 A1 bekannte kontinuierliche Verfahren, bei dem ein In-line-Dissolver als Mischaggregat verwendet wird, von Vorteil. Dabei kann das Gewichtsverhältnis von vorstehend beschriebener Verbindung zu den Harnstoffderivaten 100 : 1, vorzugsweise 90 : 1, bevorzugt 80 : 1, besonders bevorzugt 70 : 1, ganz besonders bevorzugt 60 : 1 und insbesondere 50 : 1 betragen.

Außer den vorstehend beschriebenen erfindungsgemäß zu verwendenden Harnstoffderivaten und den übrigen Bestandteilen können die Rheologiehilfsmittel noch mindestens ein Netzmittel, wie es beispielsweise in der deutschen Patentanmeldung DE 199 24 171 A1, Seite 2, Zeile 63, bis Seite 3, Zeile 24, und/oder mindestens eine modifizierte, pyrogene Kieselsäure, wie sie beispielsweise in der deutschen Patentanmeldung DE 199 24 172 A1, Seite 3, Zeilen 28 bis 32, beschrieben werden, enthalten.

Die Rheologiehilfsmittel weisen ein besonders ausgeprägtes strukturviskoses Verhalten auf.

Die Rheologiehilfsmittel sind außerordentlich breit anwendbar und insbesondere hervorragend zur Herstellung von Beschichtungsstoffen, Klebstoffen und Dichtungsmassen geeignet Die erfindungsgemäßen Klarlacke können physikalisch, thermisch, mit aktinischer Strahlung und thermisch und mit mit aktinischer Strahlung (Dual-Cure) härtbar sein.

Die erfindungsgemäßen Klarlacke können außer dem Rheologiehilfsmittel beispielsweise die in der deutschen Patentanmeldungen DE 199 24 171 A1, Seite 5, Zeile 47, bis Seite 9, Zeile 32, im Detail beschriebenen Bestandteile enthalten. Die Beschichtungsstoffe, Klebstoffe und Dichtungsmassen können durch das in der deutschen Patentanmeldung auf Seite 9, Zeilen 33 bis 54, beschriebene Verfahren hergestellt werden. Beispiele geeigneter Substrate und Beschichtungsverfahren werden ebenfalls in der deutschen Patentanmeldung auf Seite 9, Zeile 55, bis Seite 10, Zeile 23, beschrieben. Beispiele geeigneter Verfahren für die thermische Härtung und die Härtung mit aktinischer Strahlung sind beispielsweise aus der internationalen Patentanmeldung WO 98/40170, Seite 17, Zeile 18, bis Seite 19, Zeile 20, bekannt.

Die erfindungsgemäßen strukturviskosen Beschichtungsstoffe werden als Klarlacke für die Herstellung von Klarlackierungen.

Die Stabilität der erfindungsgemäßen strukturviskosen Klarlacke unter statischen und dynamischen Bedingungen, insbesondere die Ringleitungsstabilität, sowie das Ablaufverhalten bei der Applikation und der Härtung sind hervorragend.

Demnach sind die erfindungsgemäßen strukturviskosen hervorragend für Klarlacke die Beschichtung, das Verkleben und das Abdichten von Kraftfahrzeugkarosserien, Teilen von Kraftfahrzeugkarosserien, Kraftfahrzeugen im Innen- und Außenbereich, Bauwerken im Innen- und Außenbereich, Türen, Fenstern und Möbeln sowie für das Lackieren, Verkleben und Abdichten im Rahmen der industriellen Lackierung beispielsweise von Kleinteilen, wie Muttern, Schrauben, Felgen oder Radkappen, von Coils, Container, Emballagen, elektrotechnischen Bauteilen, wie Motorwicklungen oder Transformatorwicklungen, und von weißer Ware, wie Haushaltsgeräte, Heizkessel und Radiatoren, geeignet.

Die aus den erfindungsgemäßen strukturviskosen Klarlacke hergestellten erfindungsgemäßen Beschichtungen sind hart, kratzfest, witterungsstabil, chemikalienstabil und vor allem von einer außerordentlich hohen Brillanz.

Somit sind die mit den Beschichtungen beschichteten Substrate von einer außerordentlich langen Lebensdauer und einem besonders hohen Gebrauchswert, was sie bei der Herstellung und Anwendung besonders wirtschaftlich macht.

### Beispiele und Vergleichsversuche

### Herstellbeispiel 1

### Die Herstellung der Lösung eines thermisch härtbaren Methacrylatcopolymerisats 1

In einem geeigneten Reaktor, ausgestattet mit einem Rührer, zwei Tropftrichtern für die Monomermischung und die Initiatorlösung, Stickstoffeinleitungsrohr, Thermometer und Rückflusskühler, wurden 813 Gewichtsteile einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 483 Gewichtsteilen n-Butylmethacrylat, 663 Gewichtsteilen Styrol, 337 Gewichtsteilen Hydroxyethylmethacrylat und 31 Gewichtsteilen Methacrylsäure innerhalb von 4 Stunden, und eine Initiatorlösung von 122 Gewichtsteilen t-Butylperethylhexanoat in 46 Gewichtsteilen des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 65%, bestimmt in einem Umluftofen (1 h bei 130 °C).

Die Lösung des Methacrylatcopolymerisats 1 wurde als organisches Medium zur Herstellung der Rheologiehilfsmittel verwendet.

### Herstellbeispiel 2

### Die Herstellung der Lösung eines thermisch härtbaren Methacrylatcopolymerisats 2

In einem geeigneten Reaktor, ausgestattet mit einem Rührer, zwei Tropftrichtern für die Monomermischung resp. Initiatorlösung, Stickstoffeinleitungsrohr, Thermometer und Rückflusskühler, wurden 897 Gewichtsteile einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 487 Gewichtsteilen (entsprechend 34 Gew.-%, bezogen auf die Monomermischung) t-Butylacrylat, 215 Gewichtsteile (entsprechend 15 Gew.-%, bezogen auf die Monomermischung) n-Butylmethacrylat, 143 Gewichtsteile (10 Gew.-%, bezogen auf die Monoimermischung) Styrol, 572 Gewichtsteile (40 Gew.-%, bezogen auf die Monomermischung) Hydroxypropylmethacrylat und 14 Gewichtsteile (1 Gew.-%, bezogen auf die Monomermischung) Acrylsäure innerhalb von 4 Stunden, und eine Initiatorlösung von 86g t-Butylperethylhexanoat in 86 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende mit einer Mischung aus 1-Methoxypropylacetat-2, Butylglykolacetat und Butylacetat verdünnte Polymerlösung hatte einen Feststoffgehalt von 54%, bestimmt in einem Umluftofen (1 h bei 130 °C), eine Hydroxylzahl von 155 mg KOH/g Festkörper, eine Säurezahl von 10 mg KOH/g Festkörper und eine Viskosität von 23 dPas (gemessen an einer 60%igen Anlösung der Polymerlösung in dem beschriebenen aromatischen Lösemittel, unter Verwendung eines ICI Platte-Kegel Viskosimeters bei 23 °C). Das Methacrylatcopolymerisat 2 wies eine Glasübergangstemperatur Tg von 67 °C auf.

Das Methacrylatcopolymerisat 2 wurde als Bindemittel verwendet.

### Herstellbeispiel 3

### Die Herstellung der Lösung eines thermisch härtbaren Methacrylatcopolymerisats 3

Herstellbeispiel 2 wurde wiederholt, nur daß anstelle der dort eingesetzten Monomermischung eine Monomermischung aus, bezogen auf die Monomermischung
- 23 Gew.-% 2-Ethylhexylmethacrylat,
- 11,1 Gew.% 2-Ethylhexylacrylat,
- 19,25 Gew.-% n-Butylmethacrylat,
- 46,1 Gew.-% Hydroxypropylmethacrylat und
- 0,25 Gew.-% Acrylsäure
verwendet wurde. Die Polymerlösung hatte einen Feststoffgehalt von 65%, bestimmt in einem Umluftofen (1 h bei 130 °C), eine Hydroxylzahl von 179 mg KOH/g Festkörper, eine Säurezahl von 10 mg KOH/g Festkörper und eine Viskosität von 7 dPas (gemessen an einer 60%igen Anlösung der Polymerlösung in dem beschriebenen aromatischen Lösemittel, unter Verwendung eines ICI Platte-Kegel Viskosimeters bei 23 °C).

Das Methacrylatcopolymerisat 3 wurde als Bindemittel verwendet.

### Herstellbeispiel 4

### Die Herstellung eines Vernetzungsmittels auf Polyisocyanatbasis

Das Vernetzungsmittel wurde durch Vermischen von
- 54,8 Gewichtsteilen einer 90 %ige Anlösung des Trimeren vom Isocyanurattyp des Hexamethylendiisocyanats in Solventnaphtha/Butylacetat 1 : 1 (Desmodur ® N 3390 der Firma Bayer AG),
- 35,2 Gewichtsteilen des Trimeren vom Isocyanurattyp des Isophorondiisocyanats (Desmodur ® Z4470, 70 %ig, der Firma Bayer AG) und
- 10 Gewichtsteilen Butylacetat
hergestellt.

### Beispiel 1

### Die Herstellung des Rheologiehilfsmittels 1

In einem 2l-Becherglas wurden 485 g der Lösung des Methacrylatcopolymerisats 1 des Herstellbeispiels 1, 2,24 g Ethylendiamin und 3,33 g Methoxypropylamin vorgelegt. Zur Vorlage wurde unter starkem Rühren mit einem Labordissolver eine Lösung von 9,43 g Hexamethylendiisocyanat in 100 g Butylacetat innerhalb vo 5 Minuten zudosiert. Die Reaktionsmischung wurde noch während 15 Minuten intensiv gerührt. Das resultierende Rheologiehilfsmittel 1 hatte einen Feststoffgehalt von 55%, bestimmt in einem Umluftofen (1 h bei 130 °C).

### Beispiel 2

### Die Herstellung des Rheologiehilfsmittels 2

In einem 21-Becherglas wurden 485 g der Lösung des Methacrylatcopolymerisats 1 des Herstellbeispiels 1, 2,18 g Ethylendiamin und 3,67 g Hexylamin vorgelegt. Zur Vorlage wurde unter starkem Rühren mit einem Labordissolver eine Lösung von 9,15 g Hexamethylendiisocyanat in 100 g Butylacetat innerhalb vo 5 Minuten zudosiert. Die Reaktionsmischung wurde noch während 15 Minuten intensiv gerührt. Das resultierende Rheologiehilfsmittel 2 hatte einen Feststoffgehalt von 65%, bestimmt in einem Umluftofen (1 h bei 130 °C).

### Vergleichsversuch V1

### Die Herstellung des nicht erfindungsgemäßen Rheologiehilfsmittels V1

In einem 2l-Becherglas wurden 508 g der Lösung des Methacrylatcopolymerisats 1 des Herstellbeispiels 1 und 13,4 g Benzylamin vorgelegt. Zur Vorlage wurde unter starkem Rühren mit einem Labordissolver eine Lösung von 10,56 g Hexamethylendiisocyanat in 68 g Butylacetat innerhalb vo 5 Minuten zudosiert Die Reaktionsmischung wurde noch während 15 Minuten intensiv gerührt. Das resultierende Rheologiehilfsmittel V1 hatte einen Feststoffgehalt von 59%, bestimmt in einem Umluftofen (1 h bei 130 °C).

### Beispiele 3 und 4 und Vergleichsversuch V2

### Das strukturviskose Verhalten der Rheologiehilfsmittel 1, 2 und V1

Das strukturviskose Verhalten der Rheologiehilfsmittel 1 (Beispiel 3), 2 (Beispiel 4) und V1 (Vergleichsversuch V2) wurde mit Hilfe eines Rotationsviskosimeters bei unterschiedlichen Schergefällen bestimmt. Die Tabelle 1 gibt einen Überblick über die erhaltenen Ergebnisse.

**Tabelle 1: Das strukturviskose Verhalten der Rheologiehilfsmittel 1, 2 und V1**

| **Beispiele und Vergleichsversuch** | **Viskosität (mPas) bei: Schergefälle (1/s):** | | |
|---|---|---|---|
| | **10** | **100** | **1.000** |
| 3 | 6.460 | 2.201 | 766 |
| 4 | 10.929 | 2.748 | 863 |
| V2 | 3.703 | 2.397 | 954 |

Die Ergebnisse belegen, daß die Rheologiehilfsmittel 1 und 2 eine ausgeprägtere Strukturviskosität als das übliche und bekannte Rheologiehilfsmittel V1 aufwiesen.

### Beispiele 5 und 6 und Vergleichsversuche V3 und V4

### Die Herstellung erfindungsgemäßer strukturviskoser Einkomponenten-Klarlacke (Beispiele 5 und 6) und nicht erfindungsgemäßer Einkomponenten-Klarlacke (Vergleichsversuche V3 und V4)

Die Klarlacke wurden durch Vermischen und Homogenisieren der in der Tabelle 2 angegebenen Bestandteile hergestellt.

**Tabelle 2: Die stoffliche Zussammensetzung der erfindungsgemäßen strukturviskosen Einkomponenten-Klarlacke (Beispiele 5 und 6) und der nicht erfindungsgemäßen Einkomponenten-Klarlacke (Vergleichsversuche V3 und V4)**

| **Bestandteil** | **Beispiel / Vergleichsversuch:** | | | |
|---|---|---|---|---|
| | **5** | **6** | **V3** | **V4** |
| handelsübliches styrolreiches Acrylatharz; Festkörpergehalt: 90 Gew.-%; Hydroxylzahl: 125 | 460 | 460 | 460 | 637 |
| Rheologiehilfsmittel 1 (Beispiel 1) | 177 | - | - | - |
| Rheologiehilfsmittel 2 (Beispiel 2) | - | 177 | - | - |
| Rheologiehilfsmittel V1 (Vergleichsversuch V1) | - | - | 177 | - |
| handelsübliches butanolverethertes Melaminharz | 206 | 206 | 206 | 206 |
| Säurekatakysator (nature® 2500 der Firma King Industries) | 10 | 10 | 10 | 10 |
| UV-Absorber | 10 | 10 | 10 | 10 |
| Radikalfänger (HALS) | 10 | 10 | 10 | 10 |
| Verlaufadditiv auf Silikonbasis | 4 | 4 | 4 | 4 |
| Butanol | 30 | 30 | 30 | 30 |
| Aromatisches Lösemittel eines Siedebereichs von 158 -172°C | 53 | 53 | 53 | 53 |
| Xylol | 17 | 17 | 17 | 17 |

Die Klarlacke der Beispiele 5 und 6 und der Klarlack des Vergleichsversuchs V3 zeigten ein ausgeprägtes strukturviskoses Fließverhalten. Die Klarlacke der Beispiele 5 und 6 wiesen eine signifikant höhere Lager-, Transport- und Ringleitungsstabilität auf als die Klarlacke der Vergleichsversuche V3 und V4, wobei der nicht strukturviskose Klarlack des Vergleichsversuchs V4 in dieser Hinsicht vom Klarlack des Vergleichsversuchs V3 übertroffen wurde.

### Beispiele 7 und 8 und Vergleichsversuche V5 und V6

### Die Herstellung erfindungsgemäßer Klarlackierungen (Beispiele 7 und 8) und nicht erfindungsgemäßer Klarlackierungen (Beispiele V5 und V6)

Für die Herstellung der Klarlackierung des Beispiels 7 wurde der Klarlack des Beispiels 5 verwendet.

Für die Herstellung der Klarlackierung des Beispiels 8 wurde der Klarlack des Beispiels 6 verwendet.

Für die Herstellung des Klarlacks des Vergleichsversuchs V5 wurde der Klarlack des Vergleichsversuchs V3 verwendet.

Für die Herstellung des Klarlacks des Vergleichsversuchs V6 wurde der Klarlack des Vergleichsversuchs V4 verwendet.

Zur Beurteilung des Ablaufverhaltens (Anzahl und Länge der Läufer) und der Brillanz wurden die Klarlacke auf übliche und bekannte, vertikale Lochtafeln mit diagonaler Lochreihe applizert und während 30 Minuten bei 130 °C in vertikaler Stellung eingebrannt. Das Ablaufverhalten und die Brillanz wurden visuell beurteilt. Die Ergebnisse finden sich in der Tabelle 3.

**Tabelle 3: Ablaufverhalten und Brillanz der erfindungsgemäßen Klarlackierungen der Beispiele 7 und 8 und der nicht erfindungsgemäßen Klarlackierungen der Vergleichsversuche V5 und V6**

| **Beispiel / Vergleichsversuch** | **Ablaufverhalten** | **Brillanz** |
|---|---|---|
| 7 | hervorragend | sehr gut |
| 8 | hervorragend | sehr gut |
| V5 | gut | leicht getrübt |
| V6 | schlecht | sehr gut |

Die Ergebnisse der Tabelle 3 zeigten, daß nur die erfindungsgemäßen Klarlackierungen bei sehr guter Brillanz ein hervorragendes Ablaufverhalten aufwiesen.

### Beispiele 9 und 10 und Vergleichversuche V7 und V8

### Die Herstellung eines erfindungsgemäßen (Beispiel 9) und eines nicht erfindungsgemäßen (Vergleichsversuch V7) Zweikomponenten-Klarlacks und einer erfindungsgemäßen (Beispiel 10) und einer nicht erfindungsgemäßen (Vergleichsversuch V8) Klarlackierung hieraus

Zur Herstellung des Klarlacks des Beispiels 9 und des Vergleichsversuchs V7 wurden zunächst Bindemittelkomponenten durch Vermischen und Homogenisieren der Tabelle 4 angegebenen Bestandteile hergestellt. Die Bindemittelkomponenten wurden vor der Applikation mit der Vernetzungsmittelkomponente vermischt.

**Tabelle 4: Stoffliche Zusammensetzung der Klarlacke des Beispiels 9 und des Vergleichsversuchs V8 und ihre Eigenschaften**

| **Bestandteil** | **Beispiel Vergleichsversuch** | |
|---|---|---|
| | **9** | **V7** |
| Bindemittelkomponente: | | |
| Methacrylatcopolymerisat 3 des Herstellbeispiels 3 | 50 | 50 |
| Setalux ® 81753 der Firma Akzo (handelsübliches Rheologiehilfsmittel) | | 16 |
| Rheologiehilfsmittel des Beispiels 1 mit 0,5 Gew.-% eines handelsüblichen Netzmittels (Disperbyk® 161) | 16 | - |
| Methacrylatcpolymerisat 2 des Herstellbeispiels 2 | 10 | 10 |
| GB-Ester (Glykolsäurebutylester) | | 5 |
| Cyasorb ® UV 1164 L (handelsüblicher UV-Absorber) | 1,5 | 1,5 |
| Butylglykolacetat | 5,6 | 5,6 |
| Tinuvin ® 192 (handelsüblicher reversibler Radikalfänger) | 1 | 1 |
| Butanol | 1,6 | 1,6 |
| Byk ® ES 80 (handelsübliches NetzMittel) | 0,3 | 0,3 |
| Xylol | 1,5 | 1,5 |
| Dibasicester (handelsübliches Gemisch der Dimethylester der Glutar-, Adipin- und Sebacinsäure) | 2 | 2 |
| Byk ® 325 (handelsübliches Verlaufmittel) | 0,2 | 0,2 |
| Butylglykolacetat | 5,3 | 5,3 |
| Vernetzungsmittelkomponente: | | |
| Vernetzungsmittel gemäß Herstellbeispiel 4 | 50 | 50 |
| Zugabe von Butylacetat zur Einstelllung der Spritzviskosität von 25 bis 26 s im DIN-4-Auslaufbecher bei 23°C (Gew.-%) | 4,2 | 4,2 |
| Eigenschaften: | | |
| Originalviskosität im DIN-4-Auslauf-Becher bei 23°C | 34 | 34 |
| Festkörpergehalt bei Spritzviskosität (1 Stunde / 130°C) | 47,5 | 47,1 |
| Lufteinschlüsse nach Einstellung der Spritzviskosität | keine | keine |
| Strukturviskoses Verhalten bei Schergefälle 10 1/s | 113 | 116 |
| Schergefälle 1.000 1/s | 93 | 84 |

Zur Beurteilung des Ablaufverhaltens (Anzahl und Länge der Läufer) und der Brillanz wurden die Klarlacke des Beispiels 9 und des Vergleichsversuchs V7 auf übliche und bekannte, vertikale Lochtafeln mit diagonaler Lochreihe applizert und während 30 Minuten bei 140 °C in vertikaler Stellung eingebrannt. Das Ablaufverhalten und die Brillanz wurden visuell beurteilt.

Die Klarlacke ließen sich sehr gut applizieren. Ihr Ablaufverhalten war hervorragend. Indes wies die Klarlackierung des Beispiels 10 eine signifikant höhere Brillanz auf als die des Vergleichsversuchs V8.

## Patentansprüche

1. Klarlack enthaltend
- ein Rheologiehilfsmittel, enthaltend
- mindestens ein Harnstoffderivat, herstellbar indem man
(A) mindestens ein Diisocyanat mit
(B) mindestens einem Diamin mit primären und/oder sekundären Aminogruppen und mindestens einem primären Monoamin umsetzt.

2. Klarlack nach Anspruch 1, **dadurch gekennzeichnet, dass** das Diamin (B) ein primäres Diamin ist.

3. Klarlack nach Anspruch 1 oder 2, **dadurch gekennzeichnet, dass** das Äquivalentverhältnis von Isocyanatgruppen in (A) zu den Aminogruppen in (B) bei 2:1 bis 1:2 liegt.

4. Klarlack nach einem der Ansprüche 1 bis 3, **dadurch gekennzeichnet, dass** das Äquivalentverhältnis von Aminogruppen in den Diaminen (B) zu den Aminogruppen in den primären Monoaminen (B) bei 4:1 bis 1:2 liegt.

5. Klarlack nach Anspruch 4, **dadurch gekennzeichnet, dass** das Äquivalentverhältnis bei 3:1 bis 1:1 liegt.

6. Klarlack nach einem der Ansprüche 1 bis 5, **dadurch gekennzeichnet, dass** die Diamine (B) aus der Gruppe, bestehend aus Methylendiamin, Ethylendiamin, 1,2- und 1,3-Propylendiamin, 1,4-, 1,3- und 1,2-Butandiydiamin, 1,4-, 1,3- und 1,2-Diaminocyclohexan und 1,4-, 1,3- und 1,2-Di(aminomethyl)benzol, ausgewählt werden.

7. Klarlack nach einem der Ansprüche 1 bis 6, **dadurch gekennzeichnet, dass** die Harnstoffderivate durch die Umsetzung der Ausgangsprodukte (A) und (B) in der Gegenwart mindestens einer Verbindung, ausgewählt aus der Gruppe, bestehend aus physikalisch, thermisch, mit aktinischer Strahlung und thermisch und mit aktinischer Strahlung (Dual-Cure) härtbaren, niedermolekularen, oligomeren und polymeren Verbindungen, herstellbar sind.

8. Klarlack nach Anspruch 7, **dadurch gekennzeichnet, dass** die niedermolekularen Verbindungen aus der Gruppe, bestehend aus thermisch und mit aktinischer Strahlung härtbaren Reaktiwerdünnern und thermisch oder thermisch und mit aktinischer Strahlung härtbaren Vernetzungsmitteln, und die oligomeren und polymeren Verbindungen aus der Gruppe, bestehend aus statistisch, alternierend und blockartig aufgebauten, linearen, verzweigten und kammartig aufgebauten, physikalisch, thermisch, mit aktinischer Strahlung und thermisch und mit aktinischer Strahlung (Dual-Cure) (Co)Polymerisaten von olefinisch ungesättigten Monomeren, sowie Polyadditionsharzen und Polykondensationsharzen, ausgewählt werden.

9. Klarlack nach einem der Ansprüche 1 bis 8, **dadurch gekennzeichnet, dass** es mindestens einen weiteren Bestandteil, ausgewählt aus der Gruppe, bestehend aus Kieselsäuren und Netzmitteln enthält.

10. Klarlack nach einem der Ansprüche 1 bis 9, **dadurch gekennzeichnet, dass** er physikalisch, thermisch, mit aktinischer Strahlung oder thermisch und mit aktinischer Strahlung (Dual-Cure) härtbar ist.

11. Verwendung des Klarlacks gemäß einem der Ansprüche 1 bis 10, **dadurch gekennzeichnet, dass** er für die Herstellung von Klarlackierungen verwendet wird.

12. Verwendung nach Anspruch 11, **dadurch gekennzeichnet, dass** der Klarlack für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie für das Lackieren im Rahmen der industriellen Lackierung von Kleinteilen, Coils, Containern, Emballagen, elektrotechnischen Bauteilen und weißer Ware verwendet wird.

## Claims

1. Clear coat comprising
a rheological aid, comprising
- at least one urea derivative preparable by reacting
(A) at least one diisocyanate with
(B) at least one diamine with primary and/or secondary amino groups and at least one primary monoamine.

2. Clear coat according to Claim 1, **characterized in that** the diamine (B) is a primary diamine.

3. Clear coat according to Claim 1 or 2, **characterized in that** the equivalent ratio of isocyanate groups in (A) to the amino groups in (B) is from 2:1 to 1:2.

4. Clear coat according to one of Claims 1 to 3, **characterized in that** the equivalent ratio of amino groups in the diamines (B) to the amino groups in the primary monoamines (B) is from 4:1 to 1:2.

5. Clear coat according to Claim 4, **characterized in that** the equivalent ratio is from 3:1 to 1:1.

6. Clear coat according to one of Claims 1 to 5, **characterized in that** the diamines (B) are selected from the group consisting of methylenediamine, ethylenediamine, 1,2- and 1,3-propylenediamine, 1,4-, 1,3-, and 1,2-butanediamine, 1,4-, 1,3-, and 1,2-diaminocyclohexane, and 1,4-, 1,3-, and 1,2-di(aminomethyl)-benzene.

7. Clear coat according to any of Claims 1 to 6, **characterized in that** the urea derivatives are preparable by reacting the starting products (A) and (B) in the presence of at least one compound selected from the group consisting of low molecular mass, oligomeric, and polymeric compounds curable physically, thermally, with actinic radiation, and both thermally and with actinic radiation (dual cure).

8. Clear coat according to Claim 7, **characterized in that** the low molecular mass compounds are selected from the group consisting of reactive diluents curable thermally and with actinic radiation and crosslinking agents curable thermally or both thermally and with actinic radiation, and the oligomeric and polymeric compounds are selected from the group consisting of random, alternating and block, linear, branched and comb addition (co)polymers of olefinically unsaturated monomers, and also polyaddition resins and polycondensation resins, which are physically, thermally, with actinic radiation, and both thermally and with actinic radiation (dual cure).

9. Clear coat according to any of Claims 1 to 8, comprising at least one further constituent selected from the group consisting of silicas and wetting agents.

10. Clear coat according to any of Claims 1 to 9, **characterized in that** it is curable physically, thermally, with actinic radiation, or both thermally and with actinic radiation (dual cure).

11. Use of the clear coat according to any of Claims 1 to 10, **characterized in that** it is used for producing clearcoat materials.

12. Use according to Claim 11, **characterized in that** the clear coat is used for coating motor vehicle bodies and parts thereof, motor vehicles inside and out, buildings inside and out, doors, windows, furniture, and also for coating as part of the industrial coating of small parts, coils, containers, packaging, electrical components, and white goods.

## Revendications

1. Vernis transparent, contenant :
- un adjuvant rhéologique, contenant :
- au moins un dérivé d'urée, pouvant être fabriqué par mise en réaction de
(A) au moins un diisocyanate avec
(B) au moins une diamine contenant des groupes amino primaires et/ou secondaires et au moins une monoamine primaire.

2. Vernis transparent selon la revendication 1, **caractérisé en ce que** la diamine (B) est une diamine primaire.

3. Vernis transparent selon la revendication 1 ou 2, **caractérisé en ce que** le rapport équivalent entre les groupes isocyanate dans (A) et les groupes amino dans (B) est de 2:1 à 1:2.

4. Vernis transparent selon l'une quelconque des revendications 1 à 3, **caractérisé en ce que** le rapport équivalent entre les groupes amino dans les diamines (B) et les groupes amino dans les monoamines primaires (B) est de 4:1 à 1:2.

5. Vernis transparent selon la revendication 4, **caractérisé en ce que** le rapport équivalent est de 3:1 à 1:1.

6. Vernis transparent selon l'une quelconque des revendications 1 à 5, **caractérisé en ce que** les diamines (B) sont choisies dans le groupe constitué par la méthylène-diamine, l'éthylène-diamine, la 1,2- et 1,3-propylène-diamine, la 1,4-, 1,3- et 1,2-butanediyldiamine, le 1,4-, 1,3- et 1,2-diaminocyclohexane, et le 1,4-, 1,3- et 1,2-di(aminométhyl)benzène.

7. Vernis transparent selon l'une quelconque des revendications 1 à 6, **caractérisé en ce que** les dérivés d'urée peuvent être fabriqués par la mise en réaction des produits de départ (A) et (B) en présence d'au moins un composé, choisi dans le groupe constitué par les composés de faible poids moléculaire, oligomères et polymères, durcissables physiquement, thermiquement, avec un rayonnement actinique, et thermiquement et avec un rayonnement actinique (Dual Cure).

8. Vernis transparent selon la revendication 7, **caractérisé en ce que** les composés de faible poids moléculaire sont choisis dans le groupe constitué par les diluants réactifs durcissables thermiquement et avec un rayonnement actinique, et les agents de réticulation durcissables thermiquement ou thermiquement et avec un rayonnement actinique, et les composés oligomères et polymères sont choisis dans le groupe constitué par les (co)polymères de monomères oléfiniquement insaturés de structure statistique, alternée et séquentielle, linéaires, ramifiés et en peigne, physiquement, thermiquement, avec un rayonnement actinique, et thermiquement et avec un rayonnement actinique (Dual Cure), ainsi que les résines de polyaddition et les résines de polycondensation.

9. Vernis transparent selon l'une quelconque des revendications 1 à 8, **caractérisé en ce qu'**il contient au moins un autre constituant, choisi dans le groupe constitué par les silices et les agents mouillants.

10. Vernis transparent selon l'une quelconque des revendications 1 à 9, **caractérisé en ce qu'**il est durcissable physiquement, thermiquement, avec un rayonnement actinique, ou thermiquement et avec un rayonnement actinique (Dual Cure).

11. Utilisation du vernis transparent selon l'une quelconque des revendications 1 à 10, **caractérisée en ce qu'**il est utilisé pour la fabrication de vernissages transparents.

12. Utilisation selon la revendication 11, **caractérisée en ce que** le vernis transparent est utilisé pour le vernissage de carrosseries automobiles et de parties de celles-ci, d'automobiles dans la zone intérieure et extérieure, de bâtiments dans la zone intérieure et extérieure, de portes, de fenêtres et de meubles, ainsi que pour le vernissage dans le cadre du vernissage industriel de petits objets, de bobines, de contenants, d'emballages, de composants électrotechniques et d'appareils électroménagers.
